Europäisches Patentamt

European Patent Office

Office européen des brevets

(11) Numéro de publication: **0 387 149**
**A1**

## DEMANDE DE BREVET EUROPEEN

(21) Numéro de dépôt: **90400617.8**

(22) Date de dépôt: **07.03.90**

(51) Int. Cl.5: **F26B 15/12, F26B 17/28, F26B 25/20, B65G 17/32**

(30) Priorité: **10.03.89 FR 8903277**

(43) Date de publication de la demande:
**12.09.90 Bulletin 90/37**

(84) Etats contractants désignés:
**DE ES GB IT NL**

(71) Demandeur: **Crovara Pescia, Antonio**
**71 avenue Monclar**
**F-84000 Avignon(FR)**

(72) Inventeur: **Crovara Pescia, Antonio**
**71 avenue Monclar**
**F-84000 Avignon(FR)**

(74) Mandataire: **Bugnon-Hays, Claudine**
**PATCO S.A. 39, Boulevard René Cassin B.P.4**
**F-84170 Monteux(FR)**

(54) **Machine à sécher les fruits et légumes.**

(57) La présente invention concerne une machine à sécher les fruits et légumes du type comportant un châssis (1) surmonté par une enceinte métallique (2), le châssis (1) étant muni d'un tapis roulant (6) constitué par des tubes creux (5) placés côte à côte dont chacune des extrémités coopère avec une chaîne (4) mise en mouvement par un système de poulies (3), cedit châssis (1) comportant deux ventilateurs inférieurs (7), tandis que ladite enceinte (2) est munie d'un ventilateur supérieur (9) et d'un brûleur (10). De plus, l'intérieur desdits tubes creux (5) est rempli d'un liquide ou gaz (11) absorbant la chaleur, ledit châssis (1) étant muni, dans sa partie inférieure d'un dispositif de refroidissement (12) dudit tapis (6) après défilement de celui-ci sous l'enceinte (2).

Fig.1

La présente invention concerne une machine à sécher les fruits et les légumes et plus particulièrement les agrumes.

En effet, préalablement au conditionnement des fruits et légumes dans un emballage approprié, ceux-ci subissent un traitement afin d'améliorer leur durée de conservation à l'étalage.

Ce traitement consiste à décaper le fruit, l'essorer, le recouvrir d'une couche de cire alimentaire protectrice puis à le faire passer dans un tunnel de séchage.

De façon connue, les machines à sécher les fruits sont constituées par de longs tunnels dans lesquels les fruits sont séchés par un brassement d'air chaud à l'aide de ventilateurs et d'un brûleur. Dans ce type connu de tunnels de séchage, les fruits défilent sur un tapis constitué de tubes, entre lesquels sont disposés les fruits, chacune des deux extrémités longitudinales de ces tubes coopérant avec une chaine mise en mouvement de translation par un système de poulies.

Dans ce type de machines connues, les fruits ne peuvent pas être séchés à une température supérieure à 55° C. En effet, à une température plus élevée, les tubes n'ont plus une capacité d'absorption de la chaleur suffisante, ce qui provoque la surchauffe de ces tubes et par conséquent, la détérioration des fruits par brûlure.

De plus, ces tunnels de séchage du type classique décrit ci-dessus, ne pouvant pas atteindre une température supérieure à 55° C, sont d'une longueur assez importante, à savoir environ six mètres, pour réaliser le séchage complet du fruit.

Ce type de tunnel de séchage est donc très encombrant dans les entrepôts des entreprises pour le traitement des fruits et légumes.

Le but de la présente invention est de réduire l'encombrement de ce type de tunnel tout en conservant le même débit de fruits séchés par heure.

Pour réaliser un tel but, il convient d'augmenter la température de séchage, à savoir, résoudre le problème de l'élévation en température des tubes constituant le tapis décrit ci-dessus sur lequel sont disposés les fruits ou les légumes.

A cet effet, la présente invention concerne une machine à sécher les fruits et légumes du type comportant un châssis surmonté d'une enceinte métallique, ledit châssis étant muni d'un tapis roulant constitué par des tubes creux placés côte à côte, chacune des extrémités libres de cesdits tubes coopérant avec une chaîne mise en mouvement par un système de poulies, cedit châssis comportant deux ventilateurs inférieurs, tandis que ladite enceinte (2) est munie d'un ventilateur supérieur et d'un brûleur ; de façon caractéristique, l'intérieur desdits tubes creux est rempli d'un liquide ou gaz absorbant la chaleur tandis que ledit châssis comporte dans sa partie inférieure un dispositif de refroidissement desdits tubes constituant le tapis roulant une fois que celui-ci est sortie de l'enceinte.

Dans une réalisation préférentielle de l'invention, ce dispositif de refroidissement est constitué par un bac fermé rempli d'eau refroidie par un groupe frigorifique ou une arrivée constante d'eau froide provenant par exemple d'un puits.

Dans une autre forme de réalisation de l'invention, cedit dispositif de refroidissement est constitué par un système de ventilation d'air froid.

Selon la présente invention, on parvient par conséquent, à chauffer l'enceinte de ladite machine à une température supérieure à 55° C, celle-ci pouvant atteindre jusqu'à 100° C, sans qu'il y ait risque de détérioration des fruits ou légumes puisque le liquide ou gaz à l'intérieur des tubes absorbe le maximum de chaleur dégagée dans l'enceinte par le brûleur, ce qui évite que lesdits tubes creux constituant le tapis roulant brûle lesdits fruits ou légumes.

De façon préférentielle, les fruits ou légumes destinés à être séchés, sont chauffés à une température de 80° C, ce qui réduit le temps de passage de cesdits fruits ou légumes sous l'enceinte de la machine étant donné que la durée de séchage à une température plus élevée est plus rapide.

De cette manière, le but de la présente invention est réalisé, à savoir, les machines de séchage selon l'invention sont d'une dimension pouvant être réduite de moitié par rapport à l'art antérieur, ce qui est très avantageux pour les industriels afin de gagner de l'espace dans leurs entrepôts.

De plus, les fruits ou légumes étant séchés à une température plus élevée, se conservent plus longtemps car le choc thermique réalisé par le séchage à plus de 80° C anéantit les micro-organismes thermorésistants à des températures plus basses.

D'autres réalisations et avantages de l'invention ressortiront de la description qui va suivre et en se référant aux dessins annexés montrant à titre d'exemple un mode de réalisation préféré du tunnel de séchage selon l'invention. Sur ces dessins,

- la figure 1 est une vue en coupe longitudinale de la machine selon l'invention ;
- la figure 2 est une vue de détails des tubes constituant le tapis roulant selon l'invention.

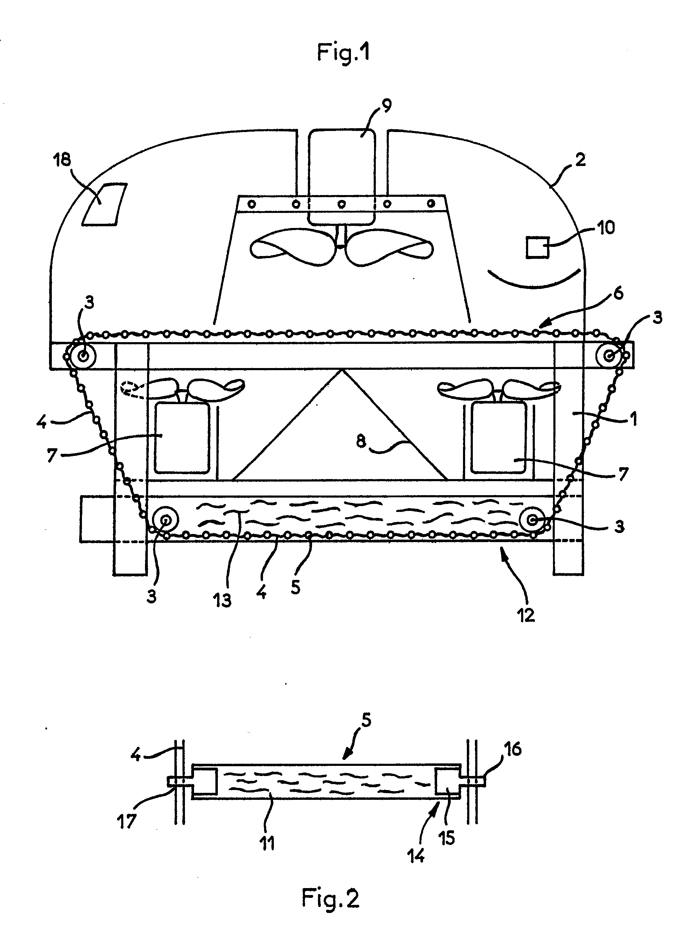

Le dispositif selon l'invention tel que représenté à la figure 1, comporte un châssis désigné par la référence générale (1) surmonté par une enceinte métallique (2).

De plus, le châssis (1) comporte deux systèmes de poulies (3) de part et d'autre des bords longitudinaux dudit tapis roulant (6), chacun de ces systèmes de poulies (3) entraînant une chaîne (4) coopérant avec une des extrémités des tubes (5) placés côte à côte et formant le tapis (6) sur lequel sont déposés les fruits ou légumes à sécher. Comme on le voit sur la figure 1, ledit châssis comporte également deux ventilateurs inférieurs (7) disposés à chacune des deux extrémités longitudinales du châssis (1), ainsi qu'un cône déflecteur (8) disposé dans la partie centrale dudit châssis (1).

D'une façon connue et telle que représentée sur la figure 1, l'enceinte (2) comporte également un ventilateur supérieur (9) ainsi qu'un brûleur (10).

Comme on le voit sur la figure 2, de façon caractéristique, l'intérieur desdits tubes creux (5) est rempli d'un liquide ou gaz (11) absorbant la chaleur tandis que selon la figure 1, le châssis (1) comporte dans sa partie inférieure un dispositif de refroidissement (12) desdits tubes (5) une fois que ceux-ci ont défilé sous l'enceinte (2). Comme représenté sur la figure 1 et de façon préférentielle, ledit dispositif de refroidissement (12) est constitué par un bac fermé (13) rempli d'une eau refroidie par un groupe frigorifique non représenté ici.

Dans ce type de réalisation, l'eau contenue dans ledit bac fermé (13) est refroidie à une température au moins inférieure à 10° C et de façon préférentielle inférieure à 0° C.

Dans une autre forme de réalisation non représentée ici, le dispositif de refroidissement (12) est constitué par un ventilateur brassant de l'air refroidi à l'aide d'un système connu non représenté ici.

Comme on le voit sur la figure 2, les tubes creux (5) formant le tapis roulant (6) comportent à chacune de leurs extrémités un embout (14) soudé une fois que chacun des tubes (5) a été rempli dudit liquide ou gaz (11) absorbant la chaleur.

Cesdits embouts (14) sont constitués par un manchon (15) de dimension correspondant au diamètre dudit tube creux (5), prolongé par une poignée (16) qui vient s'encastrer dans la chaîne (4) à axe creux (17). De cette manière, chacun desdits tubes creux (5) est entraîné le long de chacune de ses extrémités par chacune des deux chaînes (4), celles-ci étant elles-même mises en mouvement par la coopération avec les deux systèmes de poulies (3) reliées à un groupe moteur d'entrainement non représenté ici.

Selon la présente invention, les tubes creux (5) sont réalisés dans tout matériau approprié conducteur de la chaleur, soit par exemple de l'acier ou de l'aluminium. De plus, le diamètre de cesdits tubes creux (5) est compris entre 10 à 30 mm.

En ce qui concerne ledit liquide ou gaz (11) destiné à absorber la chaleur dégagée par l'enceinte (2), il s'agit de tout liquide ou gaz ayant la propriété d'absorption de la chaleur, à savoir par exemple pour le liquide, de l'huile de refroidissement et pour le gaz, du fréon.

Le fonctionnement de cette machine est le suivant :

Les fruits ou légumes sont déversés sur ledit tapis roulant (6), le premier ventilateur inférieur (7) brasse l'air et commence à sécher les fruits ou légumes, l'air étant chauffé par le brûleur (10) à flamme vive muni d'un déflecteur, puis le ventilateur supérieur (9) de l'enceinte, envoie de l'air chaud qui passe à travers lesdits tubes (5) et est réparti entre les deux ventilateurs inférieurs (7) par l'intermédiaire du cône déflecteur (8), ces deux ventilateurs inférieurs (7) réinjectant l'air chaud sur les fruits ou légumes. Ces ventilateurs inférieurs (7) sèchent les fruits et légumes et jouent le rôle de récupérateur de chaleur. De cette manière, étant donné le brassage important du volume d'air réalisé, on utilise un brûleur ayant une faible capacité calorifique.

Une fois que le tapis roulant (6) a parcouru la longueur dudit châssis (1), sous l'enceinte (2), cedit tapis (6), par l'intermédiaire des systèmes de poulies (3), passe sous la partie supérieure dudit châssis (1) et est refroidi par le dispositif de refroidissement (12). De façon préférentielle, ce tapis roulant (6) est refroidi par le passage dans ledit bac fermé (13) rempli d'eau refroidie par un groupe frigorifique, de façon à ce que lesdits tubes creux (5) et leur contenu soient suffisamment refroidis pour avoir la capacité de réabsorber la chaleur au cours de leur prochain passage sous l'enceinte métallique (2).

Enfin, de façon connue, l'enceinte (2) est munie d'une trappe d'échappement (18) permettant de régler l'hydrométrie à l'intérieur de l'enceinte de manière à ne pas brûler le fruit.

De façon générale, la machine selon la présente invention est utilisée pour sécher les agrumes (oranges, pamplemousses, clémentines, pommes) et les pommes-de-terre. Grâce à la présence des tubes creux (5) remplis de tout liquide ou gaz (11) absorbant la chaleur, l'enceinte (2) est portée à une température au moins supérieure ou égale à 80° C, ce qui permet de sécher les fruits beaucoup plus rapidement et par conséquent de réduire la longueur du châssis (1) de la machine à environ 3 m selon le débit de fruits et légumes à sécher à réaliser.

Bien entendu, l'invention n'est pas limitée au mode de réalisation décrit et représenté ici, mais on peut y apporter de nombreuses modifications sans pour cela sortir du cadre de l'invention.

## Revendications

1) Machine à sécher les fruits et légumes du type comportant un châssis (1) surmonté par une enceinte métallique (2), le châssis (1) étant muni d'un tapis roulant (6) constitué par des tubes creux (5) placés côte à côte dont chacune des extrémités coopère avec une chaîne (4) mise en mouvement par un système de poulies (3), cedit châssis (1) comportant deux ventilateurs inférieurs (7), tandis que ladite enceinte (2) est munie d'un ventilateur supérieur (9) et d'un brûleur (10), caractérisée en ce que l'intérieur desdits tubes creux (5) est rempli d'un liquide ou gaz (11) absorbant la chaleur, ledit châssis (1) étant muni, dans sa partie inférieure d'un dispositif de refroidissement (12) dudit tapis (6) après défilement de celui-ci sous l'enceinte (2).

2) Machine à sécher les fruits et légumes du type selon la revendication 1, caractérisée en ce que ledit dispositif de refroidissement (12) est constitué par un bac fermé (13) rempli d'eau refroidie par un groupe frigorifique ou à partir d'une arrivée constante d'eau froide provenant de puits, à une température au moins inférieure à 10° C.

3) Machine à sécher les fruits et légumes selon la revendication 1, caractérisée en ce que ledit dispositif de refroidissement (12) est constitué par un système de ventilation d'air froid.

4) Machine à sécher les fruits et légumes selon l'une quelconque des revendications 1 à 3, caractérisée en ce que lesdits tubes (5) sont réalisés dans tous matériaux appropriés conducteurs de la chaleur, le diamètre de cesdits tubes creux (5) étant compris entre 10 et 30 mm.

5) Machine à sécher les fruits et légumes selon l'une quelconque des revendications 1 à 4, caractérisée en ce que lesdits tubes creux (5) comportent, à chacune de leurs extrémités, un embout (14) soudé une fois que ledit tube (5) a été rempli dudit liquide ou gaz (11) absorbant la chaleur, cedit embout (14) comportant un manchon (15) de dimension correspondante à celle dudit tube (5) prolongé à l'extérieur, par une poignée (16) introduite dans l'axe creux (17) de ladite chaîne (4).

6) Machine à sécher les fruits et légumes selon l'une quelconque des revendications 1 à 5, caractérisée en ce que ledit liquide ou gaz (11) absorbant la chaleur est constitué notamment par de l'huile de refroidissement ou du gaz fréon.

7) Machine à sécher les fruits et légumes salon l'une quelconque des revendications l à 6, caractérisée en ce que l'enceinte (2) est chauffée à une température d'au moins 80° C.

Fig.1

Fig.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 089 953 (FMC CORP.)<br>* En entier *<br>--- | 1 | F 26 B 15/12<br>F 26 B 17/28<br>F 26 B 25/20<br>B 65 G 17/32 |
| A | FR-A-2 351 609 (XEDA INTERNATIONAL S.A.)<br>* En entier *<br>--- | 1 | |
| A | US-A-3 589 028 (HINTON)<br>* En entier *<br>--- | 1 | |
| A | US-A-2 130 246 (OLCOTT et al.)<br>* Page 2, lignes 29-53; figure 7 *<br>--- | 1,2 | |
| A | US-A-2 615 309 (DE MORE)<br>* Colonne 1, ligne 38 - colonne 2, ligne 14; figures 1-5 *<br>--- | 1,3 | |
| A | FR-A- 601 975 (S.A. DES MANUFACTURES DES GLACES ET PRODUITS CHIMIQUES DE SAINT-GOBAIN, CHAUNY ET CIREY)<br>* Page 2, lignes 7-20; figure 2 *<br>--- | 1 | |
| A | FR-A- 674 621 (N.V. MAATSCHAPPIJ TOT BEHEER EN EXPLOTATIE VAN OCTROOIEN)<br>* En entier *<br>--- | 1 | **DOMAINES TECHNIQUES RECHERCHES (Int. Cl.5)**<br><br>F 26 B<br>F 25 D<br>B 65 G<br>C 03 B |
| A | BE-A- 453 654 (SCHENK et al.)<br>----- | | |

Le présent rapport a été établi pour toutes les revendications

| Lieu de la recherche | Date d'achèvement de la recherche | Examinateur |
|---|---|---|
| LA HAYE | 19-06-1990 | SILVIS H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)